# EUROPEAN PATENT APPLICATION

(11) **EP 4 675 102 A1**
(43) Date of publication of application: **07.01.2026**
(21) Application number: 24185990.9
(22) Date of filing: 02.07.2024
(51) Int. Cl.: F03D 80/50, F03D 80/00

(54) **ROTOR LOCKING ASSEMBLY AND WIND TURBINE WITH ROTOR LOCKING ASSEMBLY**

(71) Applicant: Nordex Energy SE & Co. KG, 22419 Hamburg (DE)
(72) Inventor: Festner, Gerald, 22419 Hamburg (DE)
(74) Representative: Epping - Hermann - Fischer

(57) **Abstract**

A rotor locking assembly (10) for removably locking a rotor (2) of a wind turbine (1) is specified, the rotor locking assembly (10) comprising a locking pin (11) movable along a locking direction (100) between a locking position and a non-locking position, a stationary component (12) comprising a pin-retaining region (120) reaching from a first side (121) to a second side (122) of the stationary component (12) along the locking direction (100), wherein the second side (122) is opposite to the first side (121) along the locking direction (100), the pin-retaining region (120) being configured for accommodating the locking pin (11), so that the locking pin (11) is movable in the pin-retaining region (120) along the locking direction (100), a rotatable component (13) arranged at a first side (121) of the stationary component (12), the rotatable component (13) being configured for rotating with the rotor (2) and comprising at least one locking element (131) configured for interacting with the locking pin (11), so that a rotational movement of the rotatable component (13) is prevented when the locking pin (11) is in the locking position, a spacer element (14) arranged at a second side (122) of the stationary component (12), the spacer element (14) comprising a spacer region (141) being configured for accommodating a part of the locking pin (11) at least when the locking pin (11) is in the non-locking position.

## Description

A rotor locking assembly, preferably for a wind turbine, is specified. Furthermore, a wind turbine with a rotor locking assembly is specified.

A wind turbine usually comprises a rotor with multiple rotor blades. The rotor blades transform wind energy into a drive torque that drives a generator of the wind turbine via a drive train. For instance, maintenance work on rotatable components of the wind turbine requires blocking the rotational movement of the rotor. Consequently, a wind turbine needs a blocking mechanism for safely locking the rotational movement of the rotor. However, due to the mechanical load the rotor exerts on the blocking mechanism, the blocking mechanism of a wind turbine is usually designed and certified for a maximum load that depends on the wind speed and the rotor size. Consequently, the blocking mechanism cannot be used in case of higher loads, for instance caused by wind speeds exceeding a predetermined maximum wind speed and/or when the use of a bigger rotor is desired. Since the blocking mechanism is usually integrated into other components like a rotor bearing housing or a machine frame, a re-design of that component would be required for adapting the blocking mechanism to withstand higher loads, which results in high costs and efforts.

At least one object of certain embodiments is to provide rotor locking assembly, preferably a rotor locking assembly for a wind turbine. At least one object of further embodiments is to provide a wind turbine with a rotor locking assembly.

These objects are achieved by the subject-matters according to the independent claims. Advantageous embodiments and developments are characterized in the dependent claims and are disclosed by the following description and the drawings.

According to at least one embodiment, a rotor locking assembly, preferably for a wind turbine, is specified. Particularly preferably, the rotor locking assembly can be configured for removably locking a rotor of a wind turbine, so that the rotational movement of the rotor can be blocked on demand, for instance for providing a save condition for maintenance work.

According to at least one further embodiment, a wind turbine comprises a rotor locking assembly. For example, the wind turbine can comprise a nacelle and a rotor, and the rotor locking assembly can be arranged in or on the nacelle.

If not state otherwise, any features and embodiments described in the following equally apply to the rotor locking assembly and to the wind turbine.

According to a further embodiment, the rotor locking assembly comprises a locking pin that is movable along a locking direction between a locking position and a non-locking position. Preferably, the locking direction is parallel to a rotational axis characterizing the rotational movement of the rotor. Furthermore, the rotor locking assembly can comprise a rotatable component that is configured for rotating with the rotor. As described further below in detail, the rotatable component is preferably rigidly connected to a rotating component of the rotor or is integrated in a rotating component of the rotor, so that the rotatable component rotates when the rotor rotates or does not rotate when the rotor does not rotate and vice versa.

Furthermore, the rotatable component can be configured to interact with the locking pin such that a rotational movement of the rotatable component is prevented when the locking pin is in the locking position. Particularly preferably, the rotatable component can comprise at least one locking element configured for interacting with the locking pin, so that a rotational movement of the rotatable component is prevented when the locking pin is in the locking position and mechanically interacts with the locking element. Consequently, the rotational movement of the rotor is prevented when the locking pin is in the locking position. When the locking pin is in the non-locking position, there is no mechanical interaction between the locking pin and the at least one locking element and the rotational movement of the rotatable component together with the rotor is not hindered by the rotor locking assembly.

According to a further embodiment, the rotor comprises a rotor hub and at least one rotor blade mounted to the rotor hub. For example, the rotor comprises a plurality like three or more rotor blades mounted to the rotor hub. Other numbers of rotor blades are also possible. Furthermore, the rotor can comprise a rotor shaft that is mechanically connected or mounted to the rotor hub. Furthermore, via the rotor shaft the rotor can be mechanically coupled to a generator. In particular, the rotor shaft can be connected directly to the generator or can be connected indirectly, for example via a gearbox, to the generator. The rotatable component can be a part of the rotor. Being "a part of the rotor" can, in particular, mean that the rotatable component is integrally formed in one of the rotor hub and the rotor shaft. Consequently, the rotatable component can for instance be a part of a rotor hub. In another example, the rotatable component can be part of the rotor shaft. Preferably, the rotatable component can comprise or be a disk-like shaped region or part of a circular-ring shaped region or part of the rotor hub or the rotor shaft. Particularly preferably, the rotatable component can comprise or be a disk fixedly connected to the rotor, for instance to the rotor hub or the rotor shaft.

According to a further embodiment, the at least one locking element is a region or part of the rotatable component that is configured such that the locking element can mechanically interact with the locking pin such that the locking pin can hinder a rotation of the rot element when the locking pin is in the locking position. Preferably, the locking pin can be configured to engage into the locking element when being moved into the locking position. Preferably, the locking element comprises or is a hole in the rotatable component, into which the locking pin can be inserted when being moved into the locking position. According to preferred embodiments, the at least one locking element comprises a plurality of locking elements. In other words, the rotatable component can comprise a plurality of locking elements. Several or preferably all locking elements of the plurality of locking elements can be embodied similarly to each other, for instance as a plurality of similar holes that are circumferentially spaced from each other in regard to the rotational axis of the rotor.

According to a further embodiment, the rotor locking assembly comprises a stationary component. "Stationary" can, in particular, mean that the stationary component is non-moving with respect to the rotational movement of the rotor and, thus, of the rotatable component. In other words, the stationary component can be stationary with respect to the nacelle of the wind turbine, such that the stationary component does not move or rotate when the rotor with the rotatable component rotates, but can only be moved together with the nacelle when the nacelle is moving, for instance when the nacelle performs a yaw rotation. Preferably, the stationary component is a part of a rotor bearing housing and/or of a machine frame of the nacelle. The rotor bearing housing can, in particular, include a rotor bearing rotatably supporting the rotor shaft. Consequently, the stationary component is preferably integrally formed in the rotor bearing housing and/or the machine frame.

Furthermore, the stationary component can be configured for accommodating the locking pin. In particular, the stationary component can comprise a pin-retaining region reaching from a first side of the stationary component to a second side of the stationary component along the locking direction. The second side is preferably opposite to the first side along the locking direction. The first side and the second side can, in particular, be outer surfaces of the stationary component that are facing in opposite directions along the locking direction. In particular, the first side and/or the second side can be suitable for mounting further components to the stationary component if needed. The pin-retaining region can, in particular, be configured for accommodating the locking pin, so that the locking pin is movable in the pin-retaining region along the locking direction. Preferably, the pin-retaining region can have a cylindrical shape and can be a cylindrical bore or hole reaching, along the locking direction, from the first side to the second side through the stationary component. In other words, the pin-retaining region can be a through-hole reaching from the first side to the second side through the stationary component. The locking pin can move in the pin-retaining region. For instance, a lubrification and/or a slide bearing can be provided in the pin-retaining region to reduce friction in regard to the movement of the locking pin.

According to a further embodiment, the rotor locking assembly comprises a spacer element. The spacer element is arranged at the second side of the stationary component. Consequently, the stationary component is arranged, along the locking direction, between the rotatable component and the spacer element. The spacer element can, in particular, be a component that is manufactured separately form the stationary component and that can be mounted to the stationary component if desired. Preferably, the spacer element can be removably fastened to the second side of the stationary component. In preferred embodiments, the spacer element is fastened to the stationary component by one or more screws.

According to a further embodiment, the spacer element is configured for accommodating a part of the locking pin at least when the locking pin is in the non-locking position. The spacer element provides a spacer region for accommodating a part of the locking pin at least when the locking pin is in the non-locking position. The spacer region can, preferably, have a cylindrical shape. The spacer element can preferably have a ring-like shape. As described above, the pin-retaining region can be a through-hole reaching through the stationary component from the first side to the second side. The spacer region can also have a substantially cylindrical shape and surround a cylindrical region aligned with the pin-retaining region, so that the pin-retaining region can be prolonged by the spacer region of the spacer element on the second side of the stationary component.

According to a further embodiment, the spacer element is configured such that the locking pin can have a length along the locking direction for an optimum transfer of radial mechanical loads exerted by the rotor via the rotatable component and via the locking pin to the stationary component when the locking pin is in the locking position. Here and in the following, term "radial" can preferably denote directions perpendicular to the locking direction. In particular, the "radial" direction denotes a direction perpendicular to a central axis of the locking pin along the locking direction.

When the locking pin is in the locking position, radial mechanical loads, i.e. mechanical loads in directions perpendicular to the locking direction, which are exerted by the rotor via the rotatable component to the locking pin, can be transferred by the locking pin to the stationary component. The load transfer capacity, i.e. the amount of load which can be transferred, depends on the contact surface between the locking pin and the pin-retaining region and, thus, on the dimensions of the locking pin in relation to the dimensions of the pin-retaining region. A larger contact surface between the locking pin and the pin-retaining region causes a smaller surface pressure, i.e. less pressure per surface area, and, thus, smaller local mechanical stresses for given mechanical loads to be transferred. In particular, the locking pin preferably has a length such that there is a maximum contact surface between the locking pin and the pin-retaining region so that forces can be optimally transferred from the locking pin to the pin-retaining region and, thus, to the stationary component. Particularly preferably, the locking pin is arranged along a full length of the pin-retaining region when the locking pin is in the locking position. Consequently, in the locking position the locking pin preferably reaches from the second side to the first side through the whole pin-retaining region. In other words, preferably the pin-retaining region is completely filled with a part of the locking pin when the locking pin is in the locking position.

Furthermore, in the locking position the locking pin protrudes from the first side towards and into the locking element of the rotatable component. Thus, the locking pin can preferably have a length along the locking direction that is greater than a length of the pin-retaining region along the locking direction. The length of the locking pin can, thus, be greater than the distance between the first side and the second side along the locking direction. Consequently, the locking pin can protrude from the pin-retaining region along the locking direction independently of the position of the locking pin either from the first side or from the second side or from both sides.

According to a further embodiment, the locking pin has a length that is equal to or greater than the sum of the length of the pin-retaining region, the length of the at least one locking element and the length of a gap between the stationary component and the rotatable component. Here and in the following, if not state otherwise the term "length" denotes the size along the locking direction. Furthermore, the locking pin can have a length that is equal to or less than the sum of the length of the pin-retaining region, the length of the spacer region and the length of a gap between the stationary component and the rotatable component.

When moving from the locking position to the non-locking position, the locking pin moves away from the locking element of the rotatable component, so that, preferably, finally a certain protruding rear part of the locking pin protrudes from the second surface in a direction facing away from the rotatable component. The spacer element provides space in the form of the spacer region for accommodating that protruding rear part. Particularly preferably, when the locking pin is in the non-locking position, a rear end of the locking pin remote from the rotatable component is arranged at a rear side of the spacer element remote from the stationary component. In particular, the spacer element can have a front side facing the stationary component. Preferably, the front side of the spacer element can be in direct mechanical contact with the second side of the stationary component. The rear end of the locking pin can be preferably substantially flush with the rear side of the spacer element.

According to a further embodiment, the locking pin has a front end that protrudes from the first side of the stationary component into the at least one locking element when the locking pin is in the locking position. The front end of the locking pin can for example have a tapered region or can be tapered. The front end of the locking pin is retracted from the at least one locking element of the rotatable element when the locking pin is moved to the non-locking position. For example, the front end of the locking pin is flush with the first side of the stationary component when the locking pin is in the non-locking position.

According to a further embodiment, the spacer element accommodates a sensor. Preferably, the sensor can be a position sensor for determining a position of the locking pin. For instance, the position sensor can indicate when the locking pin has reached the locking position and/or the position sensor can indicate when the locking pin has reached the non-locking position and/or the sensor can indicate intermediate positions between the locking position and the non-locking position.

According to a further embodiment, the rotor locking assembly comprises a drive mechanism for moving the locking pin. The drive mechanism can be or comprise, for instance, a hand-driven mechanism with a hand wheel, a hydraulic drive or a motor drive. The drive mechanism can, in particular, be arranged at the rear side of the spacer element, so that the drive mechanism can drive the locking pin towards the locking position and drive the locking pin back to the non-locking position. In particular, the drive mechanism can be mounted directly or indirectly to the spacer element.

According to a further embodiment, the rotor locking assembly comprises a cover. The cover can preferably be mounted to a rear side of the spacer element opposite to the stationary component. The cover can, for instance, comprise or be a cover plate like a lid. The cover can be directly mounted to the stationary component, for instance by means of screws reaching through holes in the spacer element into threaded holes in the second side of the stationary component. Alternatively, the spacer element can be fastened to the stationary component by screws, and the cover is fastened to the spacer element by further screws. Preferably, the drive mechanism can be mounted to the cover or the cover can be a part of the drive mechanism.

According to a further embodiment, the spacer element can be embodied and used as retrofit solution for modifying the stationary component, so that it is possible to use a longer locking pin. Consequently, when using the spacer as a retrofit solution, the "old" locking pin that was used without spacer element can be exchanged by a "new", longer locking pin that, preferably, has a length as described above.

Further features, advantages and expediencies will become apparent from the following description of exemplary embodiments in conjunction with the figures.
Figures 1A and 1B show schematic illustrations of a wind turbine according to an embodiment,
Figures 2A and 2B show schematic illustrations of a rotor locking assembly according to a further embodiment,
Figure 3 shows a schematic illustration of a part of a rotor locking assembly according to a further embodiment,
Figures 4 to 10 show schematic illustrations of a rotor locking assembly according to further embodiments.

In the figures, elements of the same structure and/or functionality may be referred to by the same reference signs. It is to be understood that embodiments showing the figures are illustrative representations and are not necessarily drawn to scale.

In order to give a thorough understanding, preferred embodiments of a rotor locking assembly and of a wind turbine with a rotor locking assembly are described in the following in connection with the figures. However, the described embodiments and combinations of features are not limiting. Alternatively or additionally to the features described in connection with the figures, the embodiments shown in the figures can comprise further features described in the general part of the description. Moreover, the features and embodiments of the figures can be combined with each other, even if such combination is not explicitly described.

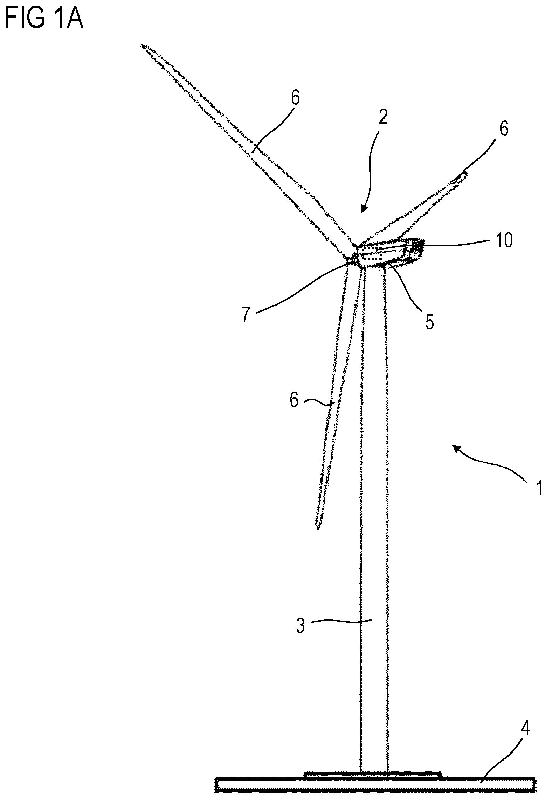

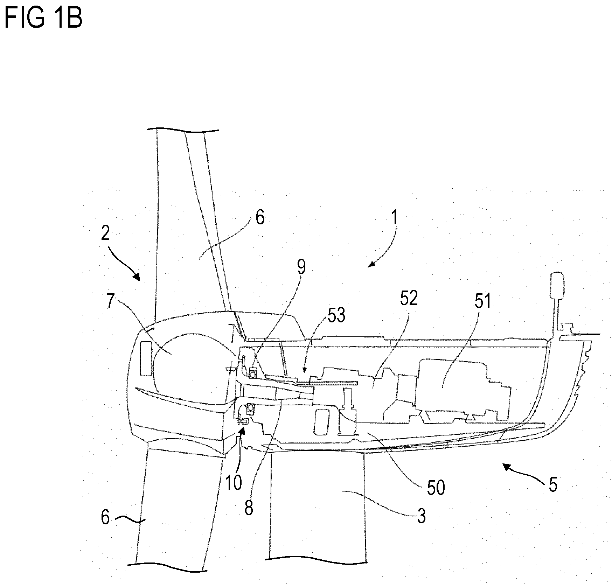

Figures 1A and 1B show an embodiment of a wind turbine 1 which comprises rotor 2 and a tower 3. Figure 1A shows the whole wind turbine 1 in a three-dimensional illustration and

Figure 1B shows a sectional view of a part of the wind turbine 1. The following description equally applies to Figures 1A and 1B.

The tower 3 of the wind turbine 1 is fixed to the ground by means of a foundation 4. A nacelle 5 is rotatably mounted at one end of the tower 3 opposite to the ground. The nacelle 5 comprises, on a machine frame 50, a generator 51 which is coupled to the rotor 2 directly or indirectly via a gearbox 52. The rotor 2 comprises in the shown embodiment three rotor blades 6 which are arranged on a rotor hub 7 that is connected to a rotor shaft 8. The rotor shaft 8 is at least partly mounted in a bearing 9 housed in the bearing housing (not shown).

The rotor shaft 8 of the rotor 2 and, if present, the gearbox 52, are part of a drive train 53. During operation, the rotor 2 is set in rotation by an air flow, for example wind. The rotational movement of the rotor 2 is transmitted by the drive train 53 to the generator 51. The generator 51 converts the mechanical energy of the rotor 2 into electrical energy.

If, for example, maintenance work needs to be carried out on rotating parts in the nacelle 5, the rotational movement of the rotor 2 has to be safely blocked during that maintenance work and has to be unblocked afterwards in order to ensure normal operation of the wind turbine 1. Therefore, the wind turbine 1 comprises a rotor locking assembly 10 mounted in or on the nacelle 5 that can, for instance, be operated by a worker to block and unblock the rotor 2.

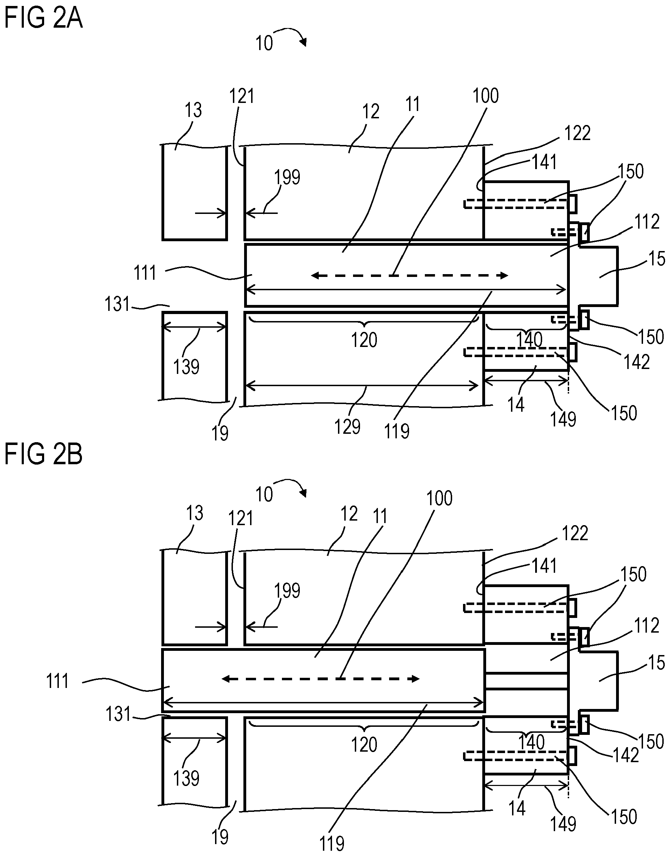

Preferred embodiments and features of the rotor locking assembly 10 are described in the following in connection with Figures 2A to 10. Although the rotor locking assembly 10 is explained in view of the wind turbine 1 shown in Figure 1, it is noted that the rotor locking assembly 10 not limited to that embodiment of the wind turbine 1.

Figures 2A and 2B show sectional views of the rotor locking assembly 10 in a non-locked state (Figure 2A) and a locked state (Figure 2B). The following description refers to both Figures 2A and 2B. During normal operation of the wind turbine, the rotor locking assembly 10 is in the non-locked state.

The rotor locking assembly 10 comprises a locking pin 11 that is configured for preventing a rotational movement of the rotor of the wind turbine. The locking pin 11 is movable along a locking direction 100 between a non-locking position causing the non-locked state shown in Figure 2A and a locking position causing the locked state shown in Figure 2B. The locking direction 100, indicated in the figures by a dashed double-arrow, is preferably parallel to the rotational axis of the rotor of the wind turbine, i.e. to the axis defined by the rotor shaft of the rotor. However, other configurations with the locking direction 100 not being parallel to the rotational axis of the rotor are also possible.

The rotor locking assembly 10 further comprises a stationary component 12. As explained in the general part, "stationary" means, in particular, that the stationary component 12 is non-moving with respect to the rotational movement of the rotor and has a fixed position and orientation with respect to the nacelle of the wind turbine. The stationary component 12 is preferably a part of a rotor bearing housing that includes a bearing for the rotor shaft and that is configured for rotatably supporting the rotor shaft. In particular, the stationary component 12 is preferably integrally formed in the rotor bearing housing. Furthermore, the stationary component 12 can be fixedly connected to the rotor bearing housing. It can also be possible that the stationary component 12 is a part of a machine frame or is fixedly connected to the machine frame.

Furthermore, the rotor locking assembly 10 comprises a rotatable component 13 arranged at a first side 121 of the stationary component 12, wherein the rotatable component 13 is configured to rotate with the rotor. The rotatable component 13 is preferably rigidly connected to a rotating component of the rotor or is integrated in a rotating component of the rotor. For instance, the rotatable component 13 can be a part of the rotor, so that the rotatable component 13 can be integrally formed as a part of the rotor hub or the rotor shaft. Furthermore, it can be possible that the rotatable component 13 is a component that is fixedly connected to the rotor hub or to the rotor shaft. For example, the rotatable component 13 can comprise or be a disk-like shaped region or part or a circular-ring shaped region or part of the rotor hub or of the rotor shaft. Moreover, the rotatable component 13 can comprise or be a disk fixedly connected to the rotor, for instance to the rotor hub or the rotor shaft.

The rotatable component 13 is configured to interact with the locking pin 11 such that the rotational movement of the rotatable component 13 and, thus, of the rotor is blocked and prevented when the locking pin 11 is in the locking position. The rotatable component 13 comprises at least one locking element 131 configured for interacting with the locking pin 11 for blocking and preventing the rotational movement of the rotatable component 13 and, thus, of the rotor.

The at least one locking element 131 is a region or part of the rotatable component 13 that is configured such that the locking element 11 can mechanically interact with the locking pin 11 when the locking pin 11 is in the locking position. As can be seen in Figure 2B, the locking pin 11 and the locking element 131 are configured such that the locking pin 11 can engage into the locking element 131 when being moved into the locking position. In the shown embodiment, the locking element is embodied as hole in the rotatable component 13, into which the locking pin 11 can be inserted when being moved into the locking position. The locking pin 11 has a front end 111 that protrudes from the first side 121 of the stationary component 12 into the locking element 131 when the locking pin 11 is in the locking position.

When the locking pin is in the non-locking position, as shown in Figure 2A, the locking pin 11 is retracted from the locking element 131, so that there is no mechanical interaction between the locking pin 11 and the rotatable component 13 with the at least one locking element 131, so that the rotational movement of the rotatable component 13 together with the rotor is not hindered by the rotor locking assembly 10.

The stationary component 12 is configured for accommodating the locking pin 11. In particular, the stationary component 12 comprises a pin-retaining region 120 reaching from the first side 121 of the stationary component 12 to a second side 122 of the stationary component 12 along the locking direction 100. The second side 122 is preferably opposite to the first side 121 along the locking direction 100 and faces away from the first side 121. The first side 121 and the second side 122 are, in particular, outer surfaces of the stationary component 12 that are facing in opposite directions along the locking direction 100. Thus, the first side 121 and/or the second side 122 can be suitable for mounting further components to the stationary component 12 if needed.

The pin-retaining region 120 is configured for accommodating the locking pin 11 such that the locking pin 11 is movable in the pin-retaining region 120 along the locking direction 100. Consequently, movement of the locking pin 11 in the pin-retaining region 120 along the locking direction 100 is guided by the pin-retaining region 120. Preferably, the pin-retaining region 120 has a cylindrical shape and can be a cylindrical bore or hole reaching, along the locking direction 100, from the first side 121 to the second side 122 through the stationary component 12. Consequently, the pin-retaining region 120 is a through-hole reaching through the stationary component 12. In particular, a cross-section of the pin-retaining region 120 when viewed along the locking direction 100 can be similar to a cross-section of the locking pin 11 when viewed along the locking direction 100. Preferably, both the pin-retaining region 120 and the locking pin 11 have a circular cross-section when viewed along the locking direction 100. However, other shapes for the ross-sections like an elliptical shape or a polygonal shape are also possible. Although a certain gap is shown between the locking pin 11 and the pin-retaining region 120 along directions perpendicular to the locking direction 100 in the figures for illustrative reasons, the dimensions of the cross-section of the locking pin 11 are preferably as close as possible to the dimensions of the cross-section of the pin-retaining region 120, so that, on one hand, an unhindered movement of the locking pin 11 is possible and, on the other hand, a transfer of forces from the locking pin 11 to the stationary component 12 is ensured. For instance, the pin-retaining region 120 can comprise a lubrification and/or a slide bearing to reduce friction in regard to the movement of the locking pin 11.

Furthermore, the rotor locking assembly 10 comprises a spacer element 14. The spacer element 14 is arranged at the second side 122 of the stationary component 12, so that the stationary component 12 is arranged, along the locking direction 100, between the rotatable component 13 and the spacer element 14. The spacer element 14 is a component that is manufactured separately from the stationary component 12 and that can be fastened to the stationary component 12 on the second side 122 if desired. Accordingly, the spacer element 14 can be configured as retrofit solution for modifying the stationary component 12 in order to provide the advantages described further below. In particular, the spacer element 14 has a front side 141 facing the stationary component 12 and a rear side 142 facing away from the stationary component 12. Preferably, the front side 141 of the spacer element 14 is in direct mechanical contact with the second side 122 of the stationary component 12.

As indicated in Figures 2A and 2B, the spacer element 14 is fastened to the stationary component by fastening means that can be one or more screws 150. In particular, the spacer element 14 can have through-holes through which the screws 150 reach into threaded holes in the second side 122 of the stationary component 12. Other fastening means are also possible, for instance clamps.

As can be seen in Figure 2A, the spacer element 14 is configured for accommodating a part of the locking pin 11 at least when the locking pin 11 is in the non-locking position. The spacer element 14 provides a spacer region 140 for accommodating said part of the locking pin 11 at least when the locking pin 11 is in the non-locking position. The spacer region 140 reaches from the front side 141 to the rear side 142.

Preferably, the spacer element 14 has a ring-like shape or is formed as a ring. The spacer region 140 can, preferably, have a cylindrical shape and can, in particular, be similar or even substantially identical to the pin-retaining region 120 in regard to its cross-section when viewed along the locking direction 100. Thus, the pin-retaining region 120 is a through-hole reaching through the stationary component 12 from the first side 121 to the second side 122 and the spacer region 140 also has a substantially cylindrical shape and surrounds the spacer region 140 formed as cylindrical region that is aligned with the pin-retaining region 120, so that the pin-retaining region 120 is effectively prolonged by the spacer region 140 of the spacer element 14 on the second side 122 of the stationary component 12. Thus, the locking pin 11 can also move in the spacer region 140 along the locking direction 100.

Furthermore, the rotor locking assembly 100 comprises a drive mechanism 15 for moving the locking pin 11. The drive mechanism 15 can be or comprise, for instance, a hand-driven mechanism with a handwheel, a hydraulic drive with a hydraulic motor or an electric drive with an electric motor. The drive mechanism 15 can for instance be connected to or comprise a spindle, for instance a threaded spindle, converting a rotational movement of the handwheel or hydraulic motor or electric motor into a linear movement of the locking pin 11 along the locking direction 100. The drive mechanism 15 can additionally include a gearbox, in particular a reducer, so that the spindle has a lower rotational speed than the motor. In another example, the drive mechanism 15 can be or comprise a hydraulic cylinder which pushes and pulls and, thus, drives the locking pin 11 along the locking direction 100. The drive mechanism 15 is preferably arranged at the rear side of the spacer element 14 and can be mounted directly or indirectly to the spacer element 14, for instance by screws 150, as shown in Figures 2A and 2B. It can also be possible, that the drive mechanism 15 is mounted to the spacer element 14 by the same screws 150 that are used to mount the spacer element 14 to the stationary component 12. The drive mechanism 15 can drive the locking pin 11 towards and into the locking position and drive the locking pin 11 back into the non-locking position.

As described in the following, the spacer element 14 is preferably configured such that the locking pin 11 can be provided with a length along the locking direction 100 that allows an optimum transfer of radial mechanical loads exerted by the rotor via the rotatable component 13 and via the locking pin 11 to the stationary component 12 when the locking pin 11 is in the locking position. When the locking pin 11 is in the locking position as indicated in Figure 2B, radial mechanical loads, i.e. mechanical loads in directions perpendicular to the locking direction 100 like radial directions, which are exerted by the rotor via the rotatable component 13 to the locking pin 11, can be transferred by the locking pin 11 to the stationary component 12. The load transfer capacity depends on the contact surface between the locking pin 11 and the pin-retaining region 120 and, thus, on the dimensions of the locking pin 11 in relation to the dimensions of the pin-retaining region 120. A larger contact surface between the locking pin 11 and the pin-retaining region 120 causes smaller local mechanical stresses for given mechanical loads to be transferred. In particular, the locking pin 11 preferably has a length such that there is a maximum contact surface between the locking pin 11 and the pin-retaining region 120 so that forces can be optimally transferred from the locking pin 11 to the pin-retaining region 120 and, thus, to the stationary component 12. As shown in Figure 2B, the locking pin 11 is preferably arranged along a full length of the pin-retaining region 120 when the locking pin 11 is in the locking position. Consequently, in the locking position the locking pin 11 preferably reaches from the second side 122 to the first side 121 through the whole pin-retaining region 120, so that the pin-retaining region 120 is completely filled with a part of the locking pin 11 when the locking pin 11 is in the locking position.

Furthermore, as described above, in the locking position the locking pin 11 protrudes from the first side 121 into the locking element 131 of the rotatable component 13. Thus, as indicated in Figures 2A and 2B, the locking pin has a length 119 along the locking direction 100 that is greater than a length 129 of the pin-retaining region 120 along the locking direction 100. In other words, the length 119 of the locking pin 11 is greater than the distance between the first side 121 and the second side 122. Consequently, the locking pin 11 will always protrude from one or both of the first and second side 121, 122 of the pin-retaining region 120 independently of the position of the locking pin 11.

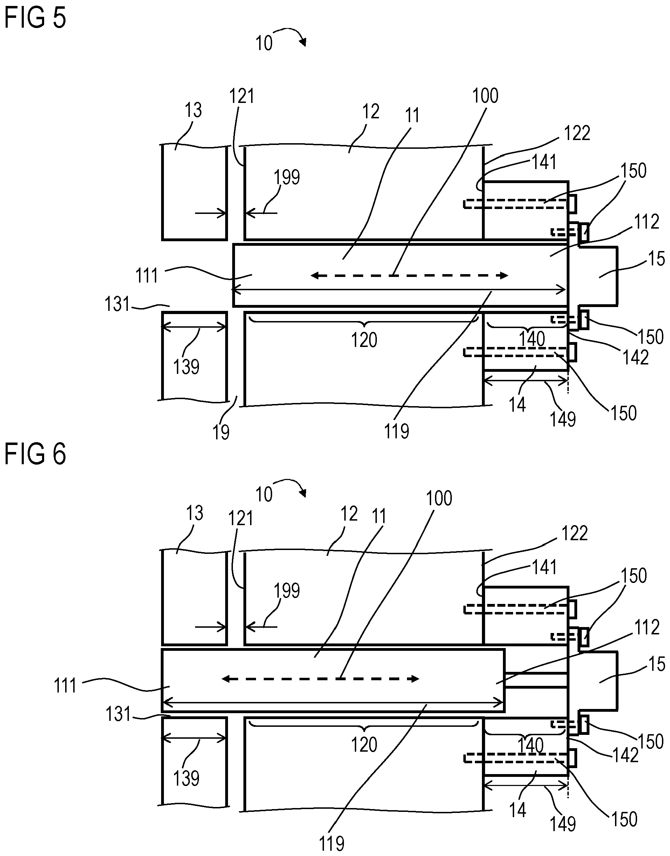

Preferably, the locking pin 11 has a length that is equal to the sum of the length 129 of the pin-retaining region, a length 139 of the at least one locking element 131 and a length 199 of a gap 19 between the stationary component 12 and the rotatable component 13, wherein throughout the description the term "length" denotes a dimension and size along the locking direction 100. Alternatively, the length 119 can be greater than said sum as described in connection with Figures 5 and 6.

When moving from the locking position to the non-locking position, the locking pin 11 moves away from the locking element 131 of the rotatable component 13, so that finally a part of the locking pin 11 at a rear end 112 of the locking pin 11 protrudes from the second surface 122 in a direction facing away from the rotatable component 13. The spacer element 14 provides space in form of the spacer region 140 for accommodating that protruding part. The front end 111 of the locking pin 11 is retracted from the at least one locking element 131 of the rotatable element 13 when the locking pin 11 is moved to the non-locking position. As indicated in Figure 2A, the front end 111 of the locking pin 11 can then be flush with the first side 121 of the stationary component 12.

Particularly preferably, when the locking pin 11 is in the non-locking position, the rear end 112 of the locking pin 11 remote from the rotatable component 13 is arranged at a rear side 142 of the spacer element 14 remote from the stationary component 12. The rear end 112 of the locking pin 11 can be preferably substantially flush with the rear side 142 of the spacer element 14. Consequently, the locking pin 11 has a length 119 that is equal to or less than the sum of the length 129 of the pin-retaining region 120, the length 149 of the spacer region 140 and the length 199 of the gap 19 between the stationary component 12 and the rotatable component 13.

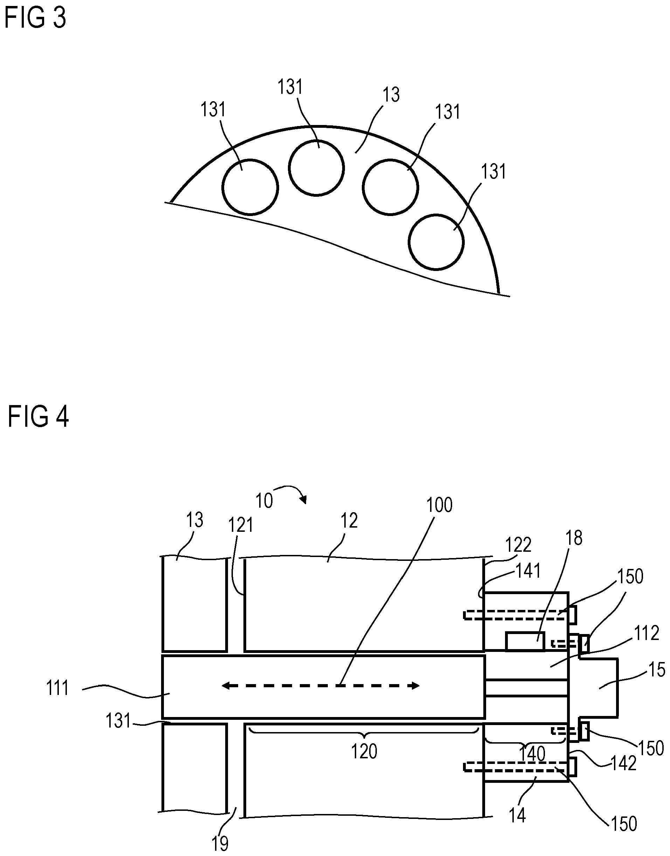

Figures 3 to 10 show modifications and further details of the rotor locking assembly 10. Therefore, the description of the following figures mainly refers to differences to previous embodiments. Features, elements and components that are not described in connection with a following figure can preferably be embodied as described in connection with other embodiments.

As shown in Figure 3 in a partial view of the rotatable component 13 along the rotational axis of the rotor shaft, the rotatable component 13 can comprise a plurality of locking elements 131. Several or preferably all locking elements 131 of the plurality of locking elements 131 can be embodied similarly to each other, for instance as a plurality of similar holes that are angularly spaced from each other in regard to the rotational axis of the rotor. It can also be possible that the plurality of locking elements 131 are arranged in several groups or that one or more locking elements 131 are situated only in a certain angular region of the rotatable component 13.

As shown in Figure 4, the spacer element 14 can accommodate a sensor 18. Preferably, the sensor 18 is a position sensor for determining a position of the locking pin 11. For instance, the sensor 18 can be configured to indicate when the locking pin 11 has reached the locking position and/or when the locking pin 11 has reached the non-locking position. Furthermore, the sensor 18 can be configured to indicate intermediate positions of the locking pin 11 between the locking position and the non-locking position. Although not shown in the other figures, the sensor 18 can be present in any of the described embodiments.

As shown in Figure 5 and as mentioned in connection with the embodiment of Figures 2A and 2B, the locking pin 11 can also have a length 119 that is greater than the sum of the length 129 of the pin-retaining region 120 and the length 149 of the spacer region 140, so that the front end 111 of the locking pin 11 can protrude from the first surface 121 of the stationary component 12 into the gap 19 always and, thus, even when the locking pin 11 is fully retracted in the non-locking position. Alternatively or additionally, as indicated in Figure 6, the locking pin 11 can have a length 119 that is greater than the sum of the length 129 of the pin-retaining region 120, the gap 19 and the locking element 131, so that the rear end 112 of the locking pin 11 can protrude from the second side 122 of the stationary component 120 into the spacer region 140 when the locking pin 11 is in the locking position, as long as the spacer element 14 provides enough space so that the locking pin 11 can be fully retracted from the locking element 131 when the locking pin 11 is moved to the non-locking position.

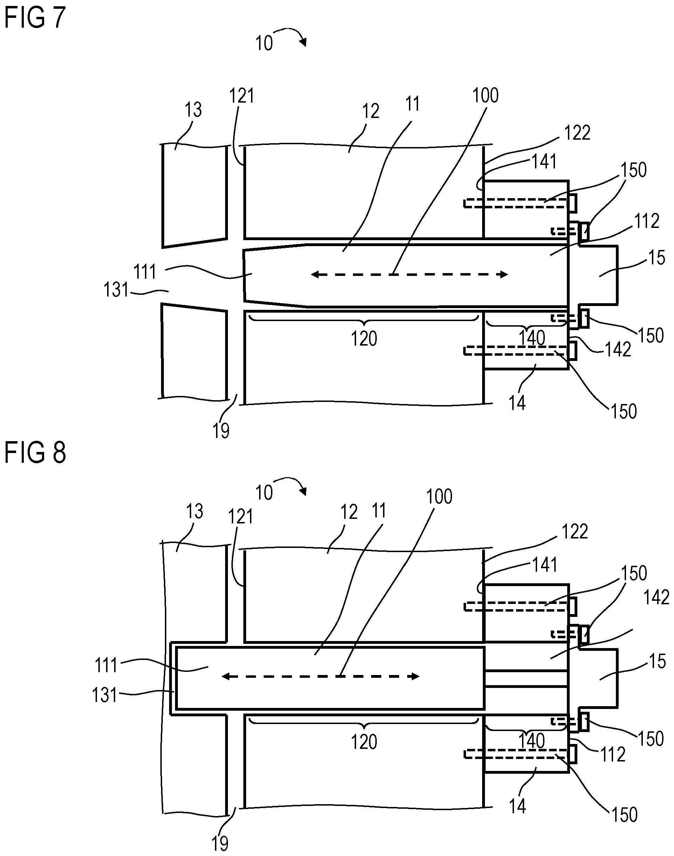

Figure 7 shows a further modification of the rotor locking assembly 10 which has a locking pin 11 with the front end 111 having a tapered region or being tapered. A tapered front end 111 can ease up inserting the locking pin 11 into the locking element 131 when the locking pin 11 is moved towards the locking position. Furthermore, corresponding to the front end 111 of the locking pin lithe locking element 131 can have a tapered region or can be tapered. The tapered profiles of the locking element 131 and of the locking pin 11 can enable a self-centering of the locking pin 11 in the locking element 131 in case the locking element 131 is initially not perfectly aligned with the locking pin 11.

Furthermore, the at least one locking element 131 can also be formed as a blind hole as shown in Figure 8. Moreover, other surface topologies in the rotatable component 13 are possible that can suitably interact with the locking pin 11.

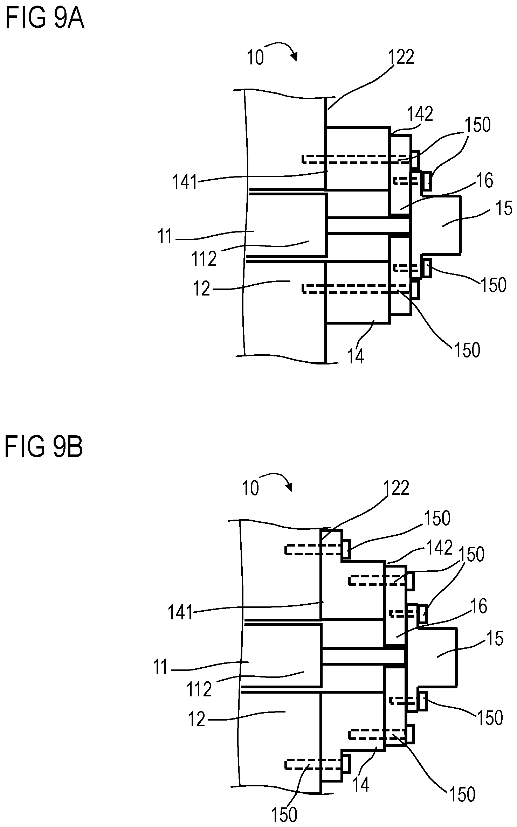

So far, the rotor locking assembly 10 has been shown having a drive mechanism 15 arranged directly on the spacer element 14. However, as shown in Figures 9A to 10, the rotor locking assembly 10 can additionally comprise a cover 16 that can, preferably directly, be mounted to a rear side 142 of the spacer element 14, the rear side 142 being opposite to the stationary component 12. Preferably, the cover 16 comprises or is a cover plate like a lid.

As indicated in Figure 9A, the cover 16 can be directly fastened to the stationary component 12, for instance by means of the screws 150 reaching through holes of the spacer element 14 into threaded holes in the second side 122 of the stationary component 12. Consequently, the spacer element 14 and the cover 16 can be fastened to the stationary component 12 together by the same screws 150. Alternatively, as indicated in Figure 9B, the spacer element 14 can be fastened to the stationary component 12 by a first set of screws 150, and the cover 14 is fastened to the spacer element 14 by a further set of screws 150. Furthermore, the cover 16 can be fastened to the spacer element 14 for instance by a clamping mechanism or the cover 16 can be integrally formed with the spacer element 14.

Furthermore, the drive mechanism 15 can be mounted to the cover 16, for instance by screws 150, or the cover 16 can be a part of the drive mechanism 15. It can also be possible that the same screws 150 are used for mounting the spacer element 14, the drive mechanism 15 and the cover 16 to the stationary component 12.

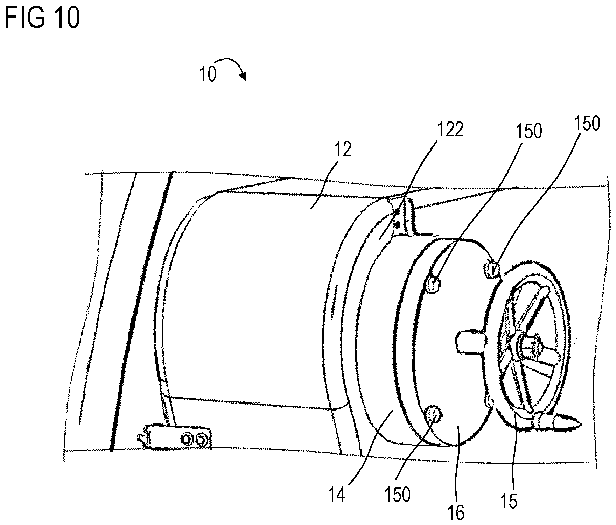

As shown in Figure 10 in a three-dimensional partial view of the rotor locking assembly 10, the drive mechanism 15 can be a hand wheel mounted to and reaching through the cover 16. The cover 16 and the spacer element 14 are tighter mounted to the stationary component 12 by the same set of screws 150 as explained in connection with Figure 9A.

The invention is not restricted by the description on the basis of the exemplary embodiments. Rather, the invention encompasses any new feature and also any combination of features, which in particular comprises any combination of features in the patent claims, even if this feature or this combination itself is not explicitly specified in the patent claims or exemplary embodiments.

### Reference signs

- 1: wind turbine
- 2: rotor
- 3: tower
- 4: foundation
- 5: nacelle
- 6: rotor blade
- 7: rotor hub
- 8: rotor shaft
- 9: bearing
- 10: rotor locking assembly
- 11: locking pin
- 12: stationary component
- 13: rotatable component
- 14: spacer element
- 15: drive mechanism
- 16: cover
- 18: sensor
- 19: gap
- 50: machine frame
- 51: generator
- 52: gearbox
- 53: drive train
- 100: locking direction
- 111: front end
- 112: rear end
- 119: length
- 120: pin-retaining region
- 121: first side
- 122: second side
- 129: length
- 131: locking element
- 139: length
- 140: spacer region
- 141: front side
- 142: rear side
- 149: length
- 150: screw
- 199: length

## Claims

1. Rotor locking assembly (10) for removably locking a rotor (2) of a wind turbine (1), the rotor locking assembly (10) comprising:
- a locking pin (11) movable along a locking direction (100) between a locking position and a non-locking position,
- a stationary component (12) comprising a pin-retaining region (120) reaching from a first side (121) to a second side (122) of the stationary component (12) along the locking direction (100), wherein the second side (122) is opposite to the first side (121) along the locking direction (100), the pin-retaining region (120) being configured for accommodating the locking pin (11), so that the locking pin (11) is movable in the pin-retaining region (120) along the locking direction (100),
- a rotatable component (13) arranged at the first side (121) of the stationary component (12), the rotatable component (13) being configured for rotating with the rotor (2) and comprising at least one locking element (131) configured for interacting with the locking pin (11), so that a rotational movement of the rotatable component (13) is prevented when the locking pin (11) is in the locking position,
- a spacer element (14) arranged at the second side (122) of the stationary component (12), the spacer element (14) comprising a spacer region (141) being configured for accommodating a part of the locking pin (11) at least when the locking pin (11) is in the non-locking position.

2. Rotor locking assembly (10) according to claim 1,
wherein the spacer element (14) is configured such that the locking pin (11) can have a length along the locking direction (100) for an optimum transfer of radial mechanical loads exerted by the rotor (2) via the rotatable component (13) and via the locking pin (11) to the stationary component (12).

3. Rotor locking assembly (10) according to claim 1 or 2, wherein the locking pin (11) is arranged along a full length of the pin-retaining region (120) when the locking pin (11) is in the locking position.

4. Rotor locking assembly (10) according to any one of the preceding claims, wherein the locking pin (11) has a length (119) along the locking direction (100) that is greater than a length (129) of the pin-retaining region (120) along the locking direction (100).

5. Rotor locking assembly (10) according to any one of the preceding claims, wherein the locking pin (11) has a front end (111) that protrudes from the first side (121) of the stationary component (12) into the at least one locking element (131) when the locking pin (11) is in the locking position.

6. Rotor locking assembly (10) according to any one of the preceding claims, wherein a rear end (112) of the locking pin (11) remote from the rotatable component (13) is arranged at a rear side (142) of the spacer element (14) remote from the stationary component (12) when the locking pin is in the non-locking position.

7. Rotor locking assembly (10) according to any one of the preceding claims, wherein the spacer element (114) is removably fastened to the second side (122) of the stationary component (12), wherein in particular the spacer element (14) is fastened to the stationary component (12) by screws (150).

8. Rotor locking assembly (10) according to any one of the preceding claims, wherein the spacer element (14) has a ring-like shape.

9. Rotor locking assembly (10) according to any one of the preceding claims, further comprising a drive mechanism (15) for moving the locking pin (11).

10. Rotor locking assembly (10) according to any one of the preceding claims, wherein a cover (16) is mounted to a rear side (142) of the spacer element (14) opposite to the stationary component (12), wherein in particular the drive mechanism (15) is mounted to the cover (16) or the cover (16) is a part of the drive mechanism (15).

11. Rotor locking assembly (10) according to any one of the preceding claims, wherein the rotatable component (13) is a part of the rotor (2) or comprises a disk fixedly connected to the rotor (2).

12. Rotor locking assembly (10) according to any one of the preceding claims, wherein the at least one locking element (131) is a hole in the rotatable component (13), into which the locking pin (11) is inserted when being moved into the locking position.

13. Rotor locking assembly (10) according to any one of the preceding claims, wherein the stationary component (12) is a part of a rotor bearing housing and/or of a machine frame.

14. Rotor locking assembly (10) according to any one of the preceding claims, wherein the spacer element (14) accommodates a sensor (18).

15. Wind turbine (1), comprising
- a rotor (2) and
- a rotor locking assembly (10) according to any one of the preceding claims.
